(19) Europäisches Patentamt / European Patent Office / Office européen des brevets

(11) **EP 4 535 771 A1**

(12) **EUROPEAN PATENT APPLICATION**
published in accordance with Art. 153(4) EPC

(43) Date of publication:
09.04.2025 Bulletin 2025/15

(21) Application number: 23815053.6

(22) Date of filing: 24.05.2023

(51) International Patent Classification (IPC):
**H04N 5/262** (2006.01)

(86) International application number:
**PCT/CN2023/096092**

(87) International publication number:
**WO 2023/231869 (07.12.2023 Gazette 2023/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.05.2022 CN 202210603818**

(71) Applicant: Vivo Mobile Communication Co., Ltd.
Dongguan, Guangdong 523863 (CN)

(72) Inventor: **LU, Xiaofeng**
Dongguan, Guangdong 523863 (CN)

(74) Representative: **Conti, Marco**
Bugnion S.p.A.
Via di Corticella, 87
40128 Bologna (IT)

(54) **PHOTOGRAPHING METHOD AND APPARATUS**

(57)   This application discloses a shooting method and apparatus, an electronic device, and a readable storage medium, and pertains to the field of computer technologies. The shooting method includes displaying an initial framed picture; receiving a first input; and displaying a target framed picture in response to the first input, where the target framed picture includes a displayed picture of a target region, the target region being determined from the initial framed picture based on the first input, and within a preset time, the displayed picture of the target region gradually adjusts to a target size.

```
┌─────────────────────────────────────────────────┐
│         Display an initial framed picture          │───── 101
└─────────────────────────────────────────────────┘
                        │
                        ▼
┌─────────────────────────────────────────────────┐
│              Receive a first input                 │───── 102
└─────────────────────────────────────────────────┘
                        │
                        ▼
┌─────────────────────────────────────────────────┐
│  Display a target framed picture in response to    │
│  the first input, where the target framed picture  │
│  includes a display picture of a target region,    │───── 103
│  the target region being determined from the       │
│  initial framed picture based on the first input,  │
│  and within a preset time, the display picture of  │
│  the target region gradually adjusts to a target   │
│  size                                              │
└─────────────────────────────────────────────────┘
```

FIG. 1

EP 4 535 771 A1

**Description**

**CROSS-REFERENCE TO RELATED APPLICATIONS**

This application claims priority to Chinese Patent Application No. 202210603818.7, filed with the China National Intellectual Property Administration on May 30, 2022 and entitled "SHOOTING METHOD AND APPARATUS", which is incorporated herein by reference in its entirety.

**TECHNICAL FIELD**

This application pertains to the field of computer technologies, and specifically, relates to a shooting method and apparatus.

**BACKGROUND**

With the increasing popularization of video shooting devices, an increasing number of people have begun to use video to document their lives. When shooting videos, users often need to adjust the focal length of a camera to change the size of objects in the framed picture.

In related technologies, to "zoom in" or "zoom out" a subject in a framed picture, users can perform a two-finger or multi-finger zoom operation on a framed picture of a video shooting device to change the size of the objects in the framed picture. Alternatively, a zoom bar can be displayed in the framed picture, and users can drag the zoom bar to perform optical zoom and/or digital zoom to change the size of the objects in the framed picture.

However, it is difficult for users to keep their hand movements completely steady, so the smoothness of the framed picture adjustment using the operations in the above related technologies is not good.

**SUMMARY**

An objective of embodiments of this application is to provide a shooting method and apparatus, an electronic device, and a readable storage medium, so as to solve the problem of unstable picture size change during shooting.

According to a first aspect, an embodiment of this application provides a shooting method, where the method includes:

displaying an initial framed picture;
receiving a first input; and
displaying a target framed picture in response to the first input, where the target framed picture includes a displayed picture of a target region, the target region being determined from the initial framed picture based on the first input, and within a preset time, the displayed picture of the target region gradually adjusts to a target size.

According to a second aspect, an embodiment of this application provides a shooting apparatus, where the apparatus includes:

a first display module configured to display an initial framed picture;
a receiving module configured to receive a first input; and
a second display module configured to display a target framed picture in response to the first input, where the target framed picture includes a displayed picture of a target region, the target region being determined from the initial framed picture based on the first input, and within a preset time, the displayed picture of the target region gradually adjusts to a target size.

According to a third aspect, an embodiment of this application provides an electronic device, where the electronic device includes a processor and a memory, and the memory stores a program or instruction capable of running on the processor, and when the program or instruction is executed by the processor, the steps of the method according to the first aspect are implemented.

According to a fourth aspect, an embodiment of this application provides a readable storage medium, where a program or instruction is stored in the readable storage medium, and when the program or the instruction is executed by a processor, the steps of the method according to the first aspect are implemented.

According to a fifth aspect, an embodiment of this application provides a chip, where the chip includes a processor and a communication interface, the communication interface is coupled to the processor, and the processor is configured to run a program or instruction so as to implement the method according to the first aspect.

According to a sixth aspect, an embodiment of this application provides a computer program product, where the program product is stored in a storage medium, and the program product is executed by at least one processor to implement the steps of the method according to the first aspect.

According to a seventh aspect, an embodiment of this application provides a shooting device, where the device is configured to execute the method according to the first aspect.

In the embodiments of this application, the shooting method includes: displaying an initial framed picture; receiving a first input; and displaying a target framed picture in response to the first input, where the target framed picture includes a displayed picture of a target region, the target region being determined from the initial framed picture based on the first input, and within a preset time, the displayed picture of the target region gradually adjusts to a target size. In this application, in a case that the initial framed picture is displayed, with the first input by the user obtained, the target framed picture can be generated and displayed to implement automatic zooming of the displayed picture of the target region in the initial framed picture, so as to make the displayed picture of the target region reach the target size, thereby allowing the user to conveniently adjust the size of the content in the framed picture, achieving the effect of smoothly adjusting the shooting picture size.

## BRIEF DESCRIPTION OF DRAWINGS

FIG. 1 is a flowchart of the steps of a shooting method according to an embodiment of this application;
FIG. 2 is a schematic diagram of a viewfinder interface according to an embodiment of this application;
FIG. 3 is a schematic diagram of a sequence of target framed pictures according to an embodiment of this application;
FIG. 4 is a flowchart of the steps of another shooting method according to an embodiment of this application;
FIG. 5 is a schematic diagram of a selection box according to an embodiment of this application;
FIG. 6 is a schematic diagram of a target region according to an embodiment of this application;
FIG. 7 is a schematic diagram of preset time adjustment according to an embodiment of this application;
FIG. 8 is a schematic diagram of multi-camera switching according to an embodiment of this application;
FIG. 9 is a block diagram of a shooting apparatus according to an embodiment of this application;
FIG. 10 shows an electronic device according to an embodiment of this application; and
FIG. 11 is a schematic diagram of a hardware structure of an electronic device according to an embodiment of this application.

## DETAILED DESCRIPTION

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that data used in this way is used interchangeably in appropriate circumstances so that the embodiments of this application can be implemented in other orders than the order illustrated or described herein. In addition, "first" and "second" are usually used to distinguish between objects of the same type and do not restrict the quantity of objects. For example, there may be one or at least two first objects. In addition, "and/or" in the specification and claims represents at least one of the connected objects, and the character "/" generally indicates that the associated objects have an "or" relationship.

The following describes in detail the shooting method provided in the embodiments of this application through specific embodiments and application scenarios thereof with reference to the accompanying drawings.

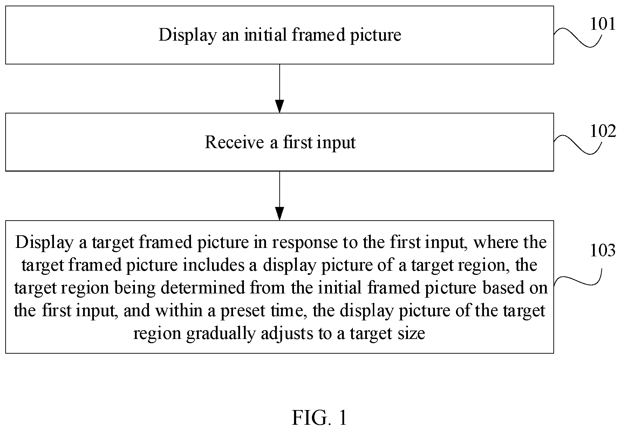

Referring to FIG. 1, FIG. 1 shows a flowchart of the steps of a shooting method according to an embodiment of this application. As shown in FIG. 1, the method specifically includes the following steps.

Step 101. Display an initial framed picture.

After a user enables camera function of an electronic device or starts recording a video using the electronic device, a viewfinder interface can be displayed on the screen of the electronic device, and an initial framed picture currently captured by an image sensor is displayed in real time in the viewfinder interface. The initial framed picture may not be the same as an image captured by the image sensor. For example, an image sensor with a 4:3 aspect ratio captures an image with a 4:3 aspect ratio, and if the user selects a 16:9 shooting ratio, the image captured by the image sensor needs to be cut, so as to obtain an initial framed picture with a 16:9 aspect ratio from the image with a 4:3 aspect ratio captured by the image sensor. In other words, the initial framed picture can be the same as the image captured by the image sensor or a part of the image captured by the image sensor.

Step 102. Receive a first input.

In this embodiment of this application, the first input may be a selection operation of a target region in the initial framed picture by the user. The selection operation can be a click operation, a box selection operation, a circling selection operation, and the like, which is not specifically limited in this embodiment of this application. For example, the user may perform a sliding operation in the initial framed picture, taking a start position and end position of the sliding operation as a pair of vertex angles to generate a corresponding rectangular box, and then determine the rectangular box as the target region.

The user may alternatively specify a target position in the framed picture through a click operation and automatically determine a target region based on the target position. For example, the user may select the center position of the framed picture through a click operation and take a region within a certain range of the center position of the framed picture as the target region.

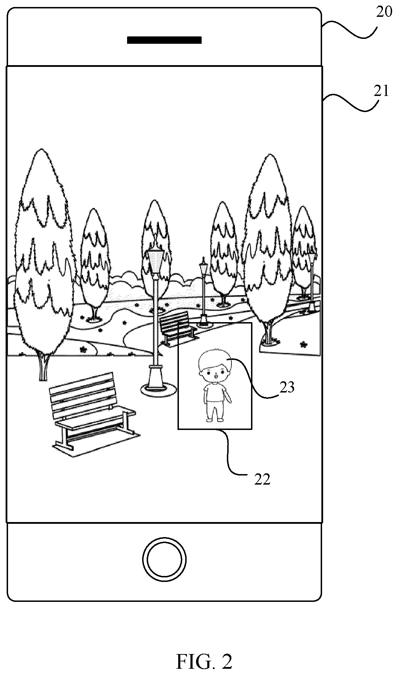

Referring to FIG. 2, FIG. 2 is a schematic diagram of a viewfinder interface according to an embodiment of this application. As shown in FIG. 2, the viewfinder interface 21 is displayed on the screen of the electronic device 20, and an initial framed picture is displayed in the viewfinder interface 21. The user can determine a target region 22 in the initial framed picture through the first input.

The user can select a target region in the initial framed picture displayed in the viewfinder interface and adjust a size of the target region in subsequent steps, changing the size of the displayed picture of the target region in the viewfinder interface to achieve a "zoom out" or "zoom in" effect on the target region in the displayed picture during shooting.

Step 103. Display a target framed picture in response to the first input, where the target framed picture includes a displayed picture of a target region, the target region being determined from the initial framed picture based on the first input, and within a preset time, the displayed picture of the target region gradually adjusts to a target size.

In this embodiment of this application, the target size can be a size of the viewfinder interface. For example, the displayed picture of the target region can be enlarged to fill the entire viewfinder interface. The target size may alternatively be a shooting focal length of the framed picture. For example, optical zoom, digital zoom, or other zoom operations can be performed on the camera module so that the shooting focal length of the target framed picture containing the target region reaches the target focal length. The target size may alternatively be a target magnification for enlarging the displayed picture of the target region. For example, the displayed picture of the target region can be enlarged by 1 time or reduced to 1/2 times. The target size may alternatively be a target resolution. The target size is not specifically limited in this embodiment of this application. The target size can be manually set by the user. For example, the user can manually set the target focal length or manually set the target magnification. The target size may alternatively be a preset value. For example, the size of the viewfinder interface in the current shooting mode can be used as the target size.

The first input can also be used to trigger the size adjustment operation of the target region. After the user enters the first input, the initial framed picture can be enlarged or reduced so that the size of the displayed picture of the target region in the framed picture changes until the size of the displayed picture of the target region in the framed picture reaches the target size, resulting in a target framed picture with the displayed picture of the target region in the target size. It should be noted that to gradually adjust the displayed picture of the target region to the target size, multiple frames of the target framed picture in which the displayed picture of the target region gradually changes to the target size are displayed after the initial framed picture is displayed.

For example, in a case that the target size is a target resolution, if the size of the displayed picture of the target region in the initial framed picture is 100*100 and the target size is 200*200, the size of the displayed picture of the target region in the target framed picture is 200*200. A target framed picture may be a framed picture with the size of the displayed picture of the target region being 120*120, and a sequence of target framed pictures composed of multiple target framed pictures may be a sequence composed of multiple framed pictures with the display size of the target region being 120*120, 140*140, 160*160, 180*180, and 200*200, respectively.

In a case that the target size is a target focal length, if the shooting focal length of the initial framed picture is 28 mm and the target focal length is 38 mm, the shooting focal length of the target framed picture is 38 mm. The shooting focal length of a target framed picture can be 30 mm, and a sequence of target framed pictures may be a sequence composed of multiple framed pictures with the shooting focal length of 30 mm, 32 mm, 34 mm, 36 mm, and 38 mm, respectively.

It should be noted that to ensure that the sequence of target framed pictures can show a process of the displayed picture of the target region uniformly changing to the target size, the size change of the displayed picture of the target region between adjacent target framed pictures in the sequence of target framed pictures can be set to a fixed value.

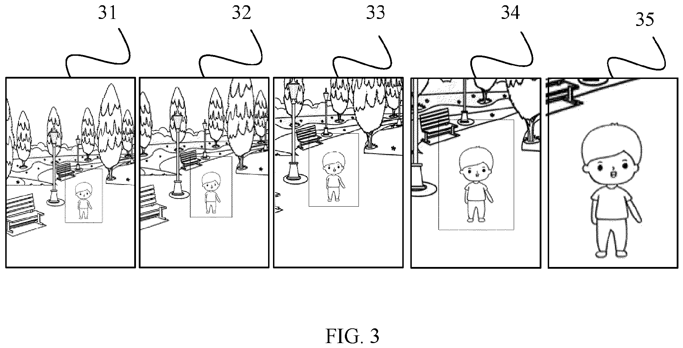

Referring to FIG. 3, FIG. 3 shows a schematic diagram of a sequence of target framed pictures according to an embodiment of this application. As shown in FIG. 3, in a case that the target size is a size of the viewfinder interface, the sequence of target framed pictures in which the displayed picture of the target region 22 shown in FIG. 2 is adjusted to the target size can include target framed pictures 31 to 35.

In summary, the shooting method according to this embodiment of this application includes displaying an initial framed picture; receiving a first input; and displaying a target framed picture in response to the first input, where the target framed picture includes a displayed picture of a target region, the target region being determined from the initial framed picture based on the first input, and within a preset time, the displayed picture of the target region gradually adjusts to a target size. In this application, in a case that the initial framed picture is displayed, with the first input by the user obtained, the target framed picture can be generated and displayed to implement automatic zooming of the displayed picture of the target region in the initial framed picture, so as to make the displayed picture of the target region reach the target size, thereby allowing the user to conveniently adjust the size of the content in the framed picture, achieving the effect of smoothly adjusting the shooting picture size.

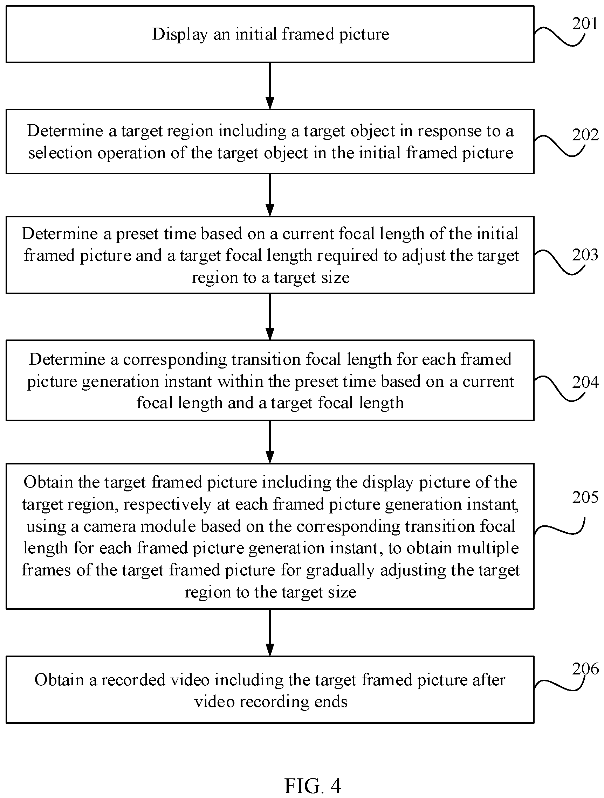

Referring to FIG. 4, FIG. 4 shows another flowchart of the steps of a shooting method according to an embodiment of this application. As shown in FIG. 4, the method specifically includes the following steps.

Step 201. Display an initial framed picture.

Step 202. Determine a target region including a target object in response to a selection operation of the target object in the initial framed picture.

The target region can be further divided into a fixed target region that does not correspond to the target object and a dynamic target region that corresponds to the target object. The fixed target region represents a fixed region in the image captured by the image sensor. For example, if the user determines a region at the center position of the initial framed picture, the region can be taken as the fixed target region.

The dynamic target region corresponding to the target object represents a dynamic region in the image captured by the image sensor in which tracking of the target object is implemented. For example, if the user determines a dynamic target region containing person A at the upper left corner of the initial framed picture, and person A moves to the lower right corner of the initial framed picture, the dynamic target region also follows person A to the lower right corner of the initial framed picture. The target object can be an object (such as a vehicle or a building), a person, or a scene (such as a river or the sky) in the framed picture.

Since the target region is a region in the image captured by the image sensor, and the user cannot directly operate the image captured by the image sensor, for a fixed target region, it is first necessary to determine a first region from the initial framed picture and then map the first region to the image captured by the sensor to obtain the fixed target region in the image captured by the sensor.

Specifically, the user can determine the first region in the initial framed picture through a sliding operation. For example, the start position and end position of the sliding operation input by the user can be obtained, and these start position and end position can be taken as a pair of vertex angles to generate a corresponding first region. The user can also determine the first region through a click operation on the initial framed picture. For example, a click position of the click operation entered by the user can be obtained, and a rectangular box of a preset size can be generated at the click position. The rectangular box can be directly taken as the first region, or adjustment operations by the user on the size and position of the rectangular box can be accepted, and an adjusted rectangular box can be taken as the first region.

For determining the dynamic target region corresponding to the target object, the first input may include a selection operation of the target object in the initial framed picture. The user can first determine a target object from the initial framed picture through the selection operation of the target object in the initial framed picture, and then determine a dynamic target region for tracking the target object based on the target object.

Specifically, the user can directly specify a target object in the framed picture using a box selection method. For example, the user may perform a sliding operation in the framed picture, taking a start position and an end position of the sliding operation as a pair of vertex angles to generate a corresponding rectangular box, and then determine the rectangular box or an object in the rectangular box as the target object. The user may alternatively specify a target position in the framed picture and automatically determine a target object based on the target position. For example, the user may select the center position of the framed picture through a click operation, perform image recognition on an image within a certain range of the center position of the framed picture, and take an object closest to the center position as the target object. The method for determining a target object is not specifically limited in this embodiment of this application. As shown in FIG. 2, the viewfinder interface 21 is displayed on the screen of the electronic device 20, and a framed picture is displayed in the viewfinder interface 21. The user can determine a target object 23 in the framed picture.

In the embodiments of this application, the user can quickly determine the corresponding target region from the initial framed picture by selecting the target object in the initial framed picture, significantly improving the efficiency and convenience of the user in determining the target region through the first input.

For details, refer to sub-steps 2021 to 2023.

Optionally, step 202 can further include the following sub-steps.

Sub-step 2021. Display a selection box corresponding to the target object in response to a selection operation of the target object in the initial framed picture.

The target object may be an object (such as a person, an animal, or a vehicle) contained in the initial framed picture, or a scene (such as a street, the sky, or a lake) contained in the initial framed picture.

In this embodiment of this application, real-time image recognition can be performed on the initial framed picture to determine the objects and scenes contained in the initial framed picture. The first input by the user on the initial framed picture can be received, and the target object corresponding to the first input can be determined based on the position of the first input in the initial framed picture and the positions of various objects or scenes in the initial framed picture. For example, an object or scene overlapping with the position of the first input can be determined as the target object, or an object or scene closest to the position of the first input can be determined as the target object.

After the target object is determined, a selection box corresponding to the target object can be generated at the target object. The size of the selection box can be determined based on the size of the target object or can be a preset size. Therefore, the selection box can completely contain the target object or only contain a part of the target object.

Sub-step 2022. Determine a size of the selection box and a position relationship between the selection box and the target object in response to an adjustment operation on the selection box.

To capture a more aesthetically pleasing picture, users usually have certain requirements for picture composition when shooting. Therefore, after the selection box of the target object is determined, an adjustment operation by the user on the selection box can be received to change the size of the selection box and the position relationship between the selection box and the target object to meet user requirements for picture composition.

For example, the user can change the size of the selection box by dragging corner points of the selection box, the user can change the aspect ratio of the selection box by dragging edges of the selection box, and the user can change the position of the selection box by dragging the start position inside the selection box. The selection operation is not specifically limited in this embodiment of this application.

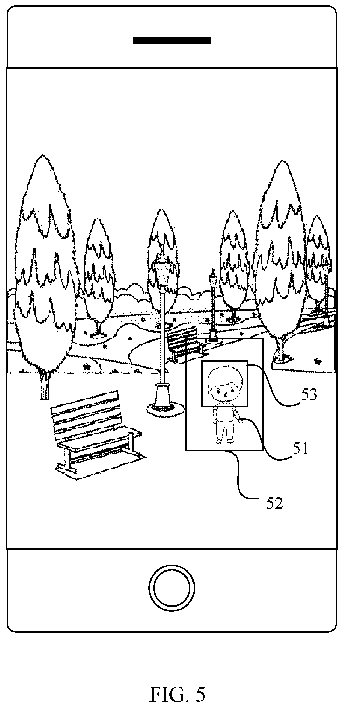

Referring to FIG. 5, FIG. 5 shows a schematic diagram of a selection box according to an embodiment of this application. As shown in FIG. 5, after the user selects a target object 51, a selection box 52 surrounding the target object 51 is generated. The user then adjusts the selection box 52 to adjust the composition in zooming to the target size, resulting in the adjusted selection box 53.

Sub-step 2023. Determine the target region for real-time tracking of the target object from the image acquired by the sensor based on the size of the selection box and the position relationship.

Since the framed picture is a part of the image captured by the sensor (framing region), the target object in the framed picture also exists in the image captured by the sensor. Therefore, after the selection box is determined, the target object can be identified from the image captured by the sensor. Based on the size of the selection box and the position relationship between the selection box and the target object, a dynamic target region corresponding to the target object can be generated in the image captured by the sensor for real-time tracking of the target object.

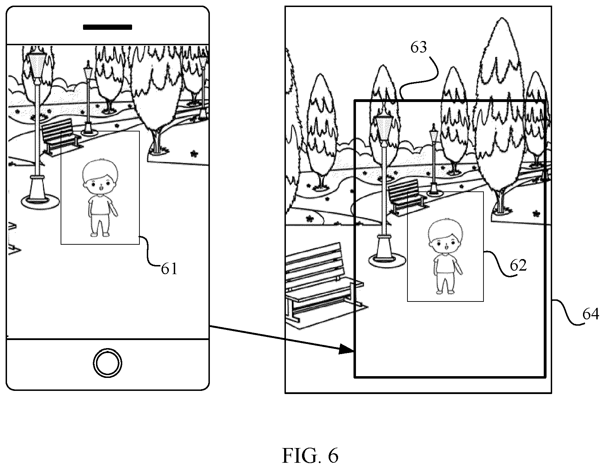

Referring to FIG. 6, FIG. 6 shows a schematic diagram of a target region according to an embodiment of this application. As shown in FIG. 6, the framed picture on the electronic device is a picture in a framing region 63 of the image 64 captured by the sensor. After the selection box 61 is mapped to the image 64 captured by the sensor, a dynamic target region 62 located in the image 64 captured by the sensor can be obtained.

In this embodiment of this application, a corresponding selection box can be automatically generated based on the target object selected by the user in the initial framed picture, improving the efficiency of the user in determining the target region. The user can also adjust the size and position of the selection box through adjustment operations to implement adjustments to the composition of the target framed picture after enlarging the target region, meeting personalized shooting needs of the user.

Step 203. Determine a preset time based on a current focal length of the initial framed picture and a target focal length required to adjust the target region to a target size.

For a camera module, its shooting focal length can reflect a magnification of a picture captured by the sensor. For example, if a zoom range of a camera module is 28 mm to 56 mm, the magnification of a framed picture taken at a focal length of 28 mm is 1, and the magnification of a framed picture taken at a focal length of 56 mm is 2.

In this embodiment of this application, the adjustment to the size of the target region can be implemented by adjusting the focal length of the camera module. Increasing the shooting focal length of the camera module can increase the size of the target region, and decreasing the shooting focal length of the camera module can reduce the size of the target region. Therefore, to adjust the target region to the target size, the shooting focal length of the camera module can be adjusted to the target focal length.

First, the target focal length required to adjust the target region to the target size can be calculated. Specifically, different algorithms can be used to calculate the target focal length based on the different types of parameters of the target size. For example, in a case that the target size is the size of a viewfinder interface (that is, the target region needs to be enlarged to fill the viewfinder interface), the target focal length can be determined based on a proportion of the height or width of the target region in the image captured by the image sensor. For example, if the minimum focal length of the camera module is 28 mm and the width of the target region accounts for 1/2 of the image captured by the image sensor, to make the target region fill the entire viewfinder interface in the width direction, the target region needs to be enlarged to twice its size, and the corresponding target focal length is 56 mm. Correspondingly, if the height of the target region accounts for 1/2 of the image captured by the image sensor, to make the target region fill the entire viewfinder interface in the height direction, the target region needs to be enlarged to twice its size, and the corresponding target focal length is 56 mm.

In addition, in this embodiment of this application, the aspect ratio of the target region can be corrected before the target focal length is determined, to make the aspect ratio of the target region the same as the aspect ratio of the viewfinder interface (that is, a shooting ratio of the current shooting mode, such as 16:9 or 4:3), so that the target region can fully fill the entire viewfinder interface.

Further, after the target region is determined, the input or selection operation by the user to the target focal length may be further received so that the user can independently determine the target focal length. For example, a focal length sliding bar containing available focal lengths can be displayed in the viewfinder interface. The user can determine the target focal length by dragging the slider on the focal length sliding bar. A focal length input box may alternatively be displayed to the user to obtain a target focal length input by the user through the input box.

After the target focal length is determined, a preset time can be determined based on a difference between the target focal length and the current focal length of the camera module. A larger difference between the target focal length and the current focal length indicates a longer preset time required. Specifically, the difference between the target focal length and the current focal length can be calculated first, and then this difference can be multiplied by a preset time coefficient to determine the preset time. For example, if the current focal length is 28 mm, the target focal length is 56 mm, and the preset time coefficient is 0.1, the preset time can be (56-28)*0.1=2.8 seconds. The current focal length represents a focal length when the initial framed picture is shot.

Optionally, step 203 may further includes the following sub-steps.

Sub-step 2031. Display a preset time adjustment control in the viewfinder interface.

Further, after the preset time is determined, the time adjustment control can be displayed to the user.

Sub-step 2032. Adjust the preset time in response to user input to the preset time adjustment controls.

The user can fine-tune the preset time through the time adjustment controls to increase or decrease the preset time, meeting the personalized needs of the user.

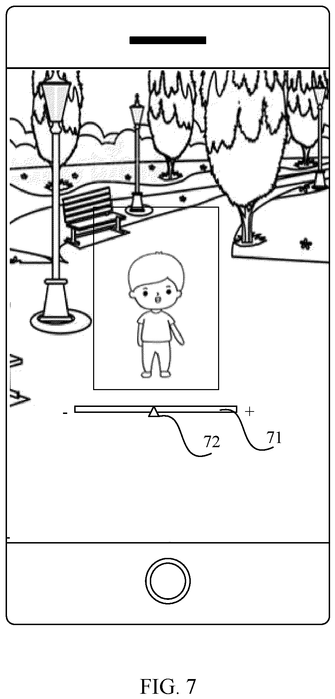

Referring to FIG. 7, FIG. 7 shows a schematic diagram of preset time adjustment according to an embodiment of this application. As shown in FIG. 7, the user can increase or decrease the preset time by dragging the adjustment slider 72 of the preset time adjustment control 71.

In this embodiment of this application, the target focal length that the camera module needs to achieve can be determined based on the target region and target size, and the preset time can be determined based on the target focal length and current focal length, so that different combinations of target region and target size may correspond to different preset times, thereby achieving both smooth picture fluency and adjustment speed during adjustment and improving the picture transition effect.

Step 204. Determine a corresponding transition focal length for each framed picture generation moment within the preset time based on a current focal length and a target focal length.

In this embodiment of this application, after a preset time is determined, it is necessary to generate a corresponding target framed picture at each framed picture generation moment within the preset time. The framed picture generation moment can represent an moment when the camera module generates the framed picture for display in the viewfinder interface. When the user is recording a video, the framed picture generation moment can also represent an moment when the camera module generates a video frame that the user stores in a recorded video file.

Specifically, the framed picture generation moment can be determined based on the refresh frame rate of the framed pictures. For example, if the refresh frame rate of the framed pictures is 30 frames/second, a refresh interval between two adjacent frames is 1/30 second. Within the preset time, a target framed picture needs to be generated every 1/30 second. If the preset time is 1 second, the framed picture generation moments include 60 moments of the 1/30 second, the 2/30 second, ..., and the 1 second.

Then, at each framed picture generation moment, the camera module needs to frame a scene with a transition focal length to obtain the corresponding target framed picture at each framed picture generation moment. Specifically, the transition focal length corresponding to each framed picture generation moment can be calculated using formula 1.

$$midZoom(t) = \frac{t(dstZoom - curZoom)}{T} + \text{curZoom} \quad \text{formula 1}$$

where t represents the framed picture generation moment, T represents the preset time, midZoom(t) represents the corresponding transition focal length at the framed picture generation moment t, dstZoom represents the target focal length, and curZoom represents the current focal length at t=0 (that is, the focal length of the camera module when the initial framed picture is shot).

Using the above formula, the corresponding transition focal length for each target framed picture generation moment can be determined.

Step 205. Obtain the target framed picture including the displayed picture of the target region, respectively at each framed picture generation moment, using a camera module based on the corresponding transition focal length for each framed picture generation moment, to obtain multiple frames of the target framed picture for gradually adjusting the target region to the target size.

After the corresponding transition focal length for each framed picture generation moment is determined, the focal length of the camera module can be adjusted so that the focal length of the camera module at each framed picture generation moment can reach the corresponding transition focal length for each framed picture generation moment. In this way, the target framed picture containing the target region of different sizes can be obtained from the image captured by the sensor at each framed picture generation moment.

Further, some camera modules consist of multiple cameras responsible for different focal lengths. For such multi-camera modules (Spatial Alignment Transform, SAT), as the focal length changes, switching between image sensors of different cameras is required to obtain the target framed picture. Therefore, in this embodiment of this application, alternatively, a different sensor can be selected to capture images based on a camera corresponding to the transition focal length to obtain the target framed picture.

For example, a multi-camera module may include camera A and camera B, where camera A corresponds to a focal length range of 28 mm to 56 mm, and camera B corresponds to a focal length range of 56 mm to 112 mm. If the corresponding transition focal length for a framed picture generation moment is 50 mm, the target framed picture can be obtained from an image captured by the sensor of camera A in this case. If the corresponding third transition focal length for a framed picture generation moment is 60 mm, the target framed picture can be obtained from an image captured by the sensor of camera B in this case.

It should be noted that in a case that the camera module is a multi-camera module, images captured by each camera sensor in the camera module can all have a corresponding target region, and the target region in the images captured by different camera sensors contains the same subject. In other words, if person A in the target region of images captured by the sensor of a camera is being tracked in real-time, person A in the target region of images captured by sensors of other cameras is also being tracked in real-time.

Further, in a case that the camera module is a multi-camera module, due to physical position differences of different cameras, when switching between cameras used to capture framed pictures occurs, there might be a jump between the framed pictures. To avoid the jump between the framed pictures when switching cameras, a handoff focal length of a camera may be rearward shifted, so that when the camera is switched, a partial region for cutting is reserved in the image captured by the sensor of the camera, avoiding the jump in the framed pictures.

For example, a multi-camera module may include camera A and camera B, where camera A corresponds to a focal length range of 28 mm to 56 mm, and camera B corresponds to a focal length range of 56 mm to 112 mm. In zooming from 55 mm to 56 mm, the camera module needs to switch to camera B to obtain a target framed picture from an image captured by a sensor of camera B. Since 56 mm is the minimum focal length of camera B, at a focal length of 56 mm, only the full image captured by the sensor of camera B can be used as the target framed picture, and cutting cannot be performed, which is likely to cause a significant jump in the position of the target region between a previous target framed picture frame and a current target framed picture frame. Therefore, the handoff focal length corresponding to camera B can be rearward shifted by a preset focal length. For example, the handoff focal length corresponding to camera B can be rearward shifted from 56 mm to 66 mm so that the target framed picture can be obtained from an image captured by the sensor of camera B at 66 mm. In this way, the target framed picture can be obtained by cutting the image captured by the sensor of camera B, where the position of the target region is unchanged or changes only slightly compared to the position of the target region in the previous frame of the target framed picture.

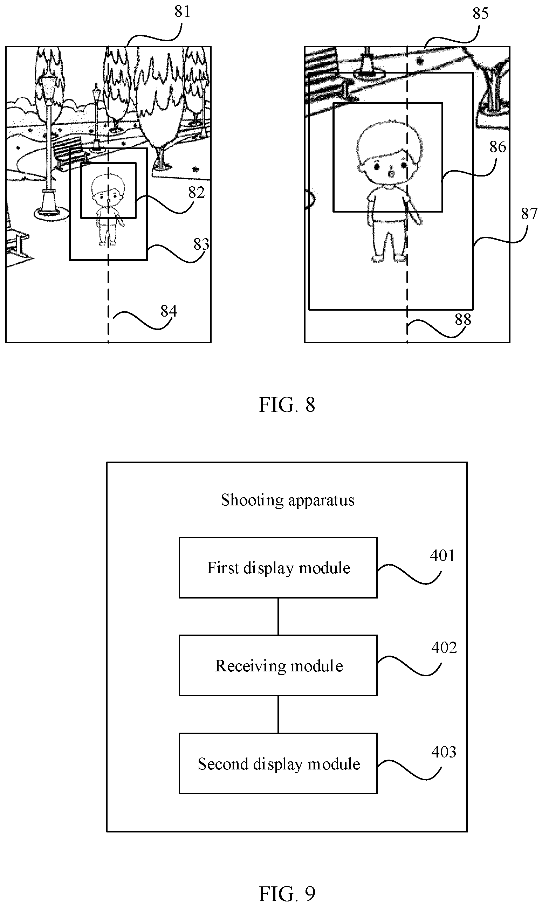

Referring to FIG. 8, FIG. 8 shows a schematic diagram of multi-camera switching according to an embodiment of this application. As shown in FIG. 8, an actual focal length of camera A is 28 mm, and an actual focal length of camera B is 56 mm. The image 81 captured by a sensor of camera A and the image 85 captured by a sensor of camera B have offsets in captured pictures due to different physical positions of the sensors. The person in the image 81 captured by the sensor of camera A is located at the centerline position 84 of the image captured by the sensor of camera A, while the person in the image 85 captured by the sensor of camera B is located to the left of the centerline 88 of the image captured by the sensor of camera B. If in the target framed picture (obtained from the image 81 captured by the sensor of camera A) generated before zooming (digital zoom) to 56 mm, the target region 82 is located at the center position of the target framed picture, when zooming to 56mm, only the full image 85 captured by the sensor can be used as the target framed picture, causing a significant jump in the position of the target region in the adjacent two target framed pictures (the positions of the target region 82 and the target region 86 in their respective target framed pictures are different). Therefore, in this embodiment of this application, if as soon as the focal length is zoomed to the actual focal length of 56 mm of camera B, the switching from camera A to camera B occurs and obtaining of a target framed picture from the image captured by the sensor of camera B starts, only the full image captured by the sensor of camera B can be used as the target framed picture. This makes content matching impossible between this frame of the target framed picture with the previous frame of the target framed picture through cutting, potentially causing jumps in the picture content (same subjects are not in same positions on the screen). Therefore, the handoff focal length of camera B can be rearward shifted (making the handoff focal length of camera B greater than the actual focal length of camera B). When the focal length is zoomed to a handoff focal length greater than 56 mm (for example, the handoff focal length may be 66 mm), a target framed picture 87 can be obtained from the image 85 captured by the sensor of camera B. In this case, the target framed picture 87 to be cropped is smaller than the image 85 captured by the sensor of camera B, allowing flexible adjustment of the cropping position of the target framed picture 87 in the image 85 captured by the sensor of camera B to make the content of the target framed picture 87 match the content of the target framed picture 83 and reduce or eliminate the jump in the framed pictures when switching from camera A to camera B.

In this embodiment of this application, the focal length can be adjusted uniformly and continuously within the preset time. At each framed picture generation moment within the preset time, a target framed picture under the transition focal length can be obtained by the camera module, thereby obtaining a sequence of target framed pictures consisting of corresponding target framed pictures for the framed picture generation moments and achieving smooth enlargement or reduction of the target region. In addition, in an electronic device with a multi-camera module, the handoff focal length of the camera can be rearward shifted, so that the target framed pictures obtained before and after camera switching do not experience a jump in the framed pictures, further improving the smoothness of adjusting the target region size.

Optionally, step 205 can further include the following sub-steps.

Sub-step 2051. Crop an initial target picture including the displayed picture of the target region from an image acquired by a sensor, respectively at each framed picture generation moment, based on the corresponding transition focal length for each framed picture generation moment.

The adjustment of the focal length can generally be divided into optical zoom and digital zoom. In a case that the camera module includes a variable focal length lens, the focal length of the lens can be directly adjusted to achieve optical zoom. In a case that the camera module only includes a fixed focal length lens, the image captured by the sensor can be cropped and enlarged to achieve digital zoom.

Specifically, a ratio of the transition focal length to the fixed focal length of the camera can be used as a cropping ratio of the image captured by the sensor of the camera, cropping a partial region of the image captured by the sensor to obtain the initial target picture.

For example, if the fixed focal length of a camera is 28 mm, and the corresponding transition focal length for a framed picture generation moment is 32 mm, the cropping ratio is 28/32=0.875. A corresponding framed picture acquisition region for the framed picture generation moment can be determined in the image captured by the sensor at 0.875 times the height or width of the image captured by the sensor, based on a shooting ratio of the current shooting mode, and the image captured by the sensor in the framed picture acquisition region can be obtained as the corresponding initial target picture for the framed picture generation moment. It should be noted that the framed picture acquisition region contains the target region.

Sub-step 2052. Adjust resolution of the initial target picture to obtain the target framed picture with a resolution matching a current shooting resolution.

Since the initial target picture is obtained by cropping the image captured by the sensor, its resolution may be lower than the shooting resolution corresponding to the current shooting mode. Therefore, after obtaining the initial target picture, if its resolution is lower than the current shooting resolution, the resolution of the initial target picture can be increased using an image interpolation algorithm to obtain the target framed picture with a resolution matching the current shooting resolution.

Similarly, the resolution of the initial target picture may alternatively be higher than the shooting resolution corresponding to the current shooting mode. Therefore, after obtaining the initial target picture, the resolution of the initial target picture can be reduced using an image super-sampling algorithm to obtain the target framed picture with a resolution matching the current shooting resolution. It should be noted that in this embodiment of this application, technical personnel can select from a variety of image resolution adjustment algorithms as needed. This is not specifically limited herein.

For example, assuming that the aspect ratio of an image captured by the sensor is 4:3, the resolution is 4000*3000, the current shooting resolution is 2000* 1500, and a shooting ratio is 4:3. With a cropping ratio of 0.2, the resolution of the initial target picture obtained from cropping the image captured by the sensor is 800*600. Since the resolution of the initial target picture is lower than the current shooting resolution, an image interpolation algorithm can be used to increase the number of pixels in the initial target picture to obtain a target framed picture with a resolution of 2000*1500.

Step 206. Obtain a recorded video including the target framed picture after video recording ends.

In the case of entering the shooting interface (at this point, a viewfinder interface is displayed, but video may not be recorded), a framed picture needs to be generated from an image captured by the sensor and displayed in the viewfinder interface. If the user starts recording a video, the framed picture displayed in the viewfinder interface is recorded for generating a corresponding recorded video.

Therefore, in a case that the user opens the shooting function but does not start recording video, a sequence of target framed pictures can be displayed in the viewfinder interface to achieve the purpose of smoothly adjusting the size of the target object, making the size adjustment process displayed in the viewfinder interface smoother and more stable and avoiding the instability of the picture caused by the user manually adjusting the shooting focal length.

In a case that the user opens the shooting function and starts recording video, not only the sequence of target framed pictures can be displayed in the viewfinder interface, but also the target framed picture can be recorded synchronously as video frames. This allows the user to obtain a recorded video containing the sequence of target framed pictures after finishing recording.

In this embodiment of this application, the corresponding initial target picture for each framed picture generation moment can be obtained from the framed pictures of the sensor first, and then the resolution of the initial target picture can be adjusted to obtain the target framed picture with a resolution matching the current shooting resolution, making the sequence of target framed pictures and the current shooting video frames have a consistent resolution, thereby obtaining better framing effects and/or video recording effects.

In summary, the shooting method according to this embodiment of this application includes displaying an initial framed picture; receiving a first input; and displaying a target framed picture in response to the first input, where the target framed picture includes a displayed picture of a target region, the target region being determined from the initial framed picture based on the first input, and within a preset time, the displayed picture of the target region gradually adjusts to a target size. In this application, in a case that the initial framed picture is displayed, with the first input by the user obtained, the target framed picture can be generated and displayed to implement automatic zooming of the displayed picture of the target region in the initial framed picture, so as to make the displayed picture of the target region reach the target size. This allows the user to conveniently adjust the size of content in the framed picture and record videos with smooth picture zooming.

The shooting method provided in this embodiment of this application can be executed by a shooting apparatus. In an embodiment of this application, a shooting apparatus executing the shooting method is used as an example to describe the shooting apparatus provided in the embodiments of this application.

Referring to FIG. 9, FIG. 9 is a structural diagram of a shooting apparatus according to an embodiment of this application. As shown in FIG. 9, the shooting apparatus includes:

a first display module 401 configured to display an initial framed picture;
a receiving module 402 configured to receive a first input; and
a second display module 403 configured to display a target framed picture in response to the first input, where the target framed picture includes a displayed picture of a target region, the target region being determined from the initial framed picture based on the first input, and within a preset time, the displayed picture of the target region gradually adjusts to a target size.

Optionally, the apparatus further includes:

a focal length module configured to determine a corresponding transition focal length for each framed picture generation moment within the preset time based on a current focal length and a target focal length; and
a target framed picture module configured to obtain the target framed picture including the displayed picture of the target region, respectively at each framed picture generation moment, using a camera module based on the corresponding transition focal length for each framed picture generation moment, to obtain multiple frames of the target framed picture for gradually adjusting the target region to the target size.

Optionally, the target framed picture module includes:

an initial target picture sub-module configured to crop an initial target picture including the displayed picture of the target region from an image acquired by a sensor, respectively at each framed picture generation moment, based on the corresponding transition focal length for each framed picture generation moment; and
a resolution sub-module configured to adjust resolution of the initial target picture to obtain the target framed picture with a resolution matching a current shooting resolution.

Optionally, the first input includes a selection operation of a target object in the initial framed picture. The apparatus further includes:
a region determination module configured to determine a target region including the target object in response to the selection operation of the target object in the initial framed picture.

Optionally, the region determination module includes:

a selection box sub-module configured to display a selection box corresponding to the target object in response to the selection operation of the target object in the initial framed picture;
an adjustment sub-module configured to determine a size of the selection box and a position relationship between the selection box and the target object in response to an operation of adjusting the selection box; and
a target region determination sub-module configured to determine the target region for real-time tracking of the target object from the image acquired by the sensor based on the size of the selection box and the position relationship.

Optionally, the apparatus further includes:
a preset time module configured to determine the preset time based on a current focal length of the initial framed picture and a target focal length required to adjust the target region to the target size.

Optionally, the apparatus further includes:

a control display module configured to display a preset time adjustment control in a viewfinder interface; and
a time adjustment module configured to adjust the preset time in response to user input to the preset time adjustment control.

Optionally, the apparatus further includes:
a recording module configured to obtain a recorded video including the target framed picture after video recording ends.

In summary, the shooting apparatus according to this embodiment of this application includes: a first display module configured to display an initial framed picture; a receiving module configured to receive a first input; and a second display module configured to display a target framed picture in response to the first input, where the target framed picture includes a displayed picture of a target region, the target region being determined from the initial framed picture based on the first input, and within a preset time, the displayed picture of the target region gradually adjusts to a target size. In this application, in a case that the initial framed picture is displayed, with the first input by the user obtained, the target framed picture can be generated and displayed to implement automatic zooming of the displayed picture of the target region in the initial framed picture, so as to make the displayed picture of the target region reach the target size. This allows the user to conveniently adjust the size of content in the framed picture and record videos with smooth picture zooming.

The shooting apparatus in this embodiment of this application may be an electronic device, or may be a component in an electronic device such as an integrated circuit or chip. The electronic device may be a terminal or a device other than terminals. For example, the electronic device may be a mobile phone, a tablet computer, a notebook computer, a palmtop computer, a vehicle-mounted electronic device, a mobile internet device (Mobile Internet Device, MID), an augmented reality (augmented reality, AR)/virtual reality (virtual reality, VR) device, a robot, a wearable device, an ultra-mobile personal computer (ultra-mobile personal computer, UMPC), a netbook, or a personal digital assistant (personal digital assistant, PDA), or may be a server, a network attached storage (Network Attached Storage, NAS), a personal computer (personal computer, PC), a television (television, TV), a teller machine, a self-service machine, or the like. This is not specifically limited in this embodiment of this application.

The shooting apparatus in this embodiment of this application may be an apparatus having an operating system. The operating system may be an Android (Android) operating system, an iOS operating system, or other possible operating systems, and is not specifically limited in the embodiments of this application.

The shooting apparatus provided in this embodiment of this application can implement the processes implemented in the method embodiments in FIG. 1 to FIG. 8. To avoid repetition, details are not described herein again.

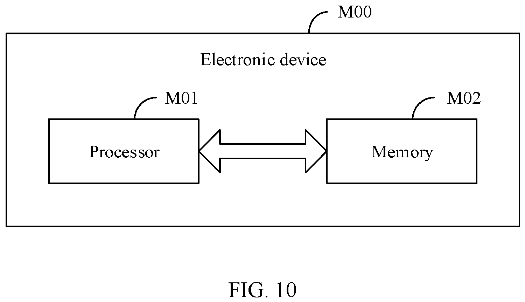

Optionally, as shown in FIG. 10, an embodiment of this application further provides an electronic device M00 including a processor M01 and a memory M02. The memory M02 has a program or instruction stored thereon and capable of running on the processor M01. When the program or the instruction is executed by the processor M01, the steps of the foregoing embodiment of the shooting method are implemented, with the same technical effects achieved. To avoid repetition, details are not described herein again.

It should be noted that the electronic device in this embodiment of this application includes the foregoing mobile electronic device and non-mobile electronic device.

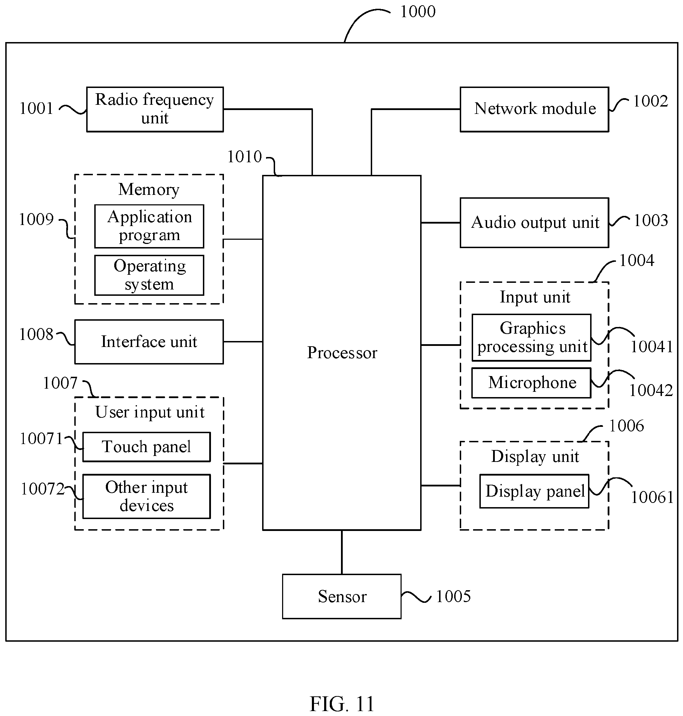

FIG. 11 is a schematic diagram of a hardware structure of an electronic device according to an embodiment of this application.

The electronic device 1000 includes but is not limited to components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

Those skilled in the art can understand that the electronic device 1000 may further include a power supply (for example, a battery) that supplies power to various components. The power supply may be logically connected to the processor 1010 through a power management system, so that functions such as charge and discharge management and power consumption management are implemented by using the power management system. The structure of the electronic device shown in FIG. 11 does not constitute a limitation on the electronic device. The electronic device may include more or fewer components than those shown in the figure, or some components may be combined, or there may be a different component layout. Details are not described herein again.

The first display module 1006 is configured to display an initial framed picture.

The user input unit 1007 is configured to receive a first input performed by a user.

The user input unit 1007 is configured to respond to the first input. The processor 1010 is configured to display a target framed picture in response to the first input, where the target framed picture includes a displayed picture of a target region, the target region being determined from the initial framed picture based on the first input, and within a preset time, the displayed picture of the target region gradually adjusts to a target size.

The processor 1010 is configured to determine a corresponding transition focal length for each framed picture generation moment within the preset time based on a current focal length and a target focal length; and obtain the target framed picture including the displayed picture of the target region, respectively at each framed picture generation moment, using a camera module based on the corresponding transition focal length for each framed picture generation moment, to obtain multiple frames of the target framed picture for gradually adjusting the target region to the target size.

The processor 1010 is configured to crop an initial target picture including the displayed picture of the target region from an image acquired by a sensor, respectively at each framed picture generation moment, based on the corresponding transition focal length for each framed picture generation moment; and adjust resolution of the initial target picture to obtain the target framed picture with a resolution matching a current shooting resolution.

The user input unit 1007 is configured to respond to the selection operation of the target object in the initial framed picture. The processor 1010 is configured to determine a target region including the target object in response to the selection operation of the target object in the initial framed picture.

The user input unit 1007 is configured to respond to an operation of adjusting the selection box. The processor 1010 is configured to determine a size of the selection box and a position relationship between the selection box and the target object in response to an operation of adjusting the selection box.

The processor 1010 is configured to determine the target region for real-time tracking of the target object from the image acquired by the sensor based on the size of the selection box and the position relationship.

The processor 1010 is configured to determine the preset time based on a current focal length of the initial framed picture and a target focal length required to adjust the target region to the target size.

The display unit 1006 is configured to display a preset time adjustment control in a viewfinder interface.

The user input unit 1007 is configured to respond to user input to the preset time adjustment control. The processor 1010 is configured to adjust the preset time in response to user input to the preset time adjustment control.

The processor 1010 is configured to obtain a recorded video including the target framed picture after video recording ends.

In summary, the electronic device according to this embodiment of this application performs the steps of displaying an initial framed picture; receiving a first input; and displaying a target framed picture in response to the first input, where the target framed picture includes a displayed picture of a target region, the target region being determined from the initial framed picture based on the first input, and within a preset time, the displayed picture of the target region gradually adjusts to a target size. In this application, in a case that the initial framed picture is displayed, with the first input by the user obtained, the target framed picture can be generated and displayed to implement automatic zooming of the displayed picture of the target region in the initial framed picture, so as to make the displayed picture of the target region reach the target size, thereby allowing the user to conveniently adjust the size of the content in the framed picture, achieving the effect of smoothly adjusting the shooting picture size.

It should be understood that in an embodiment of this application, the input unit 1004 may include a graphics processing unit (Graphics Processing Unit, GPU) 10041 and a microphone 10042. The graphics processing unit 10041 processes image data of a static picture or video obtained by an image capture apparatus (such as a camera) in an image capture or video capture mode. The display unit 1006 may include a display panel 10061, and the display panel 10061 may be configured in a form of a liquid crystal display, an organic light-emitting diode, and the like. The user input unit 1007 includes at least one of a touch panel 10071 and other input devices 10072. The touch panel 10071 is also referred to as a touchscreen. The touch panel 10071 may include two parts: a touch detection apparatus and a touch controller. The other input devices 10072 may include but are not limited to a physical keyboard, a function key (such as a volume control key or a power on/off key), a trackball, a mouse, a joystick, and the like. Details are not described herein.

The memory 1009 may be configured to store software programs and various data. The memory 1009 may include a first storage region for storing programs or instructions and a second storage region for storing data. The first storage region may store an operating system, an application program or instruction required by at least one function (for example, a sound play function or an image play function), and the like. Additionally, the memory 1009 may be a volatile memory or a non-volatile memory, or the memory x09 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 1009 in the embodiments of this application includes but is not be limited to these or any other applicable types of memories.

The processor 1010 may include one or at least two processing units. Optionally, the processor 1010 may integrate an application processor and a modem processor. The application processor primarily processes operations involving an operating system, user interface, application program, or the like. The modem processor primarily processes radio communication signals, for example, being a baseband processor. It can be understood that the modem processor may alternatively be not integrated in the processor 1010.

An embodiment of this application further provides a readable storage medium. The readable storage medium stores a program or instruction, and when the program or instruction is executed by a processor, the processes of the foregoing embodiments of the video shooting method are implemented, with the same technical effects achieved. To avoid repetition, details are not described herein again.

The processor is a processor in the electronic device described in the foregoing embodiments. The readable storage medium includes a computer-readable storage medium such as a computer read-only memory ROM, a random access memory RAM, a magnetic disk, or an optical disc.

Another embodiment of this application provides a chip. The chip includes a processor and a communication interface, the communication interface is coupled to the processor, and the processor is configured to run a program or instruction to implement the processes of the foregoing embodiments of the video shooting method, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program product. The computer program product is stored in a readable storage medium. The computer program product is executed by at least one processor to implement the processes of the foregoing embodiments of the video shooting method, with the same technical effects achieved. To avoid repetition, details are not described herein again.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the method and apparatus in the embodiments of this application is not limited to performing the functions in the order shown or discussed, but may also include performing the functions in a substantially simultaneous manner or in a reverse order depending on the functions involved. For example, the described method may be performed in an order different from the order described, and steps may be added, omitted, or combined. In addition, features described with reference to some examples may be combined in other examples.

Based on the above description of embodiments, persons skilled in the art can clearly understand that the method in the foregoing embodiments can be implemented through software on a necessary general hardware platform or certainly through hardware only, but in many cases, the former is the more preferred implementation. Based on such an understanding, the technical solutions of this application essentially, or the part contributing to the prior art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, a network device, or the like) to perform the method described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other forms without departing from the principle of this application and the protection scope of the claims, and all such forms fall within the protection scope of this application.

**Claims**

1. A shooting method, wherein the method comprises:

    displaying an initial framed picture;
    receiving a first input; and
    displaying a target framed picture in response to the first input, wherein the target framed picture comprises a displayed picture of a target region, the target region being determined from the initial framed picture based on the first input, and within a preset time, the displayed picture of the target region gradually adjusts to a target size.

2. The method according to claim 1, wherein the method further comprises:

   determining a corresponding transition focal length for each framed picture generation moment within the preset time based on a current focal length and a target focal length; and
   obtaining the target framed picture comprising the displayed picture of the target region, respectively at each framed picture generation moment, using a camera module based on the corresponding transition focal length for each framed picture generation moment, to obtain multiple frames of the target framed picture for gradually adjusting the target region to the target size.

3. The method according to claim 2, wherein the obtaining the target framed picture comprising the displayed picture of the target region, respectively at each framed picture generation moment, using a camera module based on the corresponding transition focal length for each framed picture generation moment comprises:

   cropping an initial target picture comprising the displayed picture of the target region from an image acquired by a sensor, respectively at each framed picture generation moment, based on the corresponding transition focal length for each framed picture generation moment; and
   adjusting resolution of the initial target picture to obtain the target framed picture with a resolution matching a current shooting resolution.

4. The method according to claim 1, wherein the first input comprises a selection operation of a target object in the initial framed picture, and the method further comprises:
   determining a target region comprising the target object in response to the selection operation of the target object in the initial framed picture.

5. The method according to claim 4, wherein the determining a target region comprising the target object in response to the selection operation of the target object in the initial framed picture comprises:

   displaying a selection box corresponding to the target object in response to the selection operation of the target object in the initial framed picture;
   determining a size of the selection box and a position relationship between the selection box and the target object in response to an operation of adjusting the selection box; and
   determining the target region for real-time tracking of the target object from the image acquired by the sensor based on the size of the selection box and the position relationship.

6. The method according to claim 1, wherein the method further comprises:
   determining the preset time based on a current focal length of the initial framed picture and a target focal length required to adjust the target region to the target size.

7. The method according to claim 6, wherein the method further comprises:

   displaying a preset time adjustment control in a viewfinder interface; and
   adjusting the preset time in response to user input to the preset time adjustment control.

8. The method according to claim 1, wherein the method further comprises:
   obtaining a recorded video comprising the target framed picture after video recording ends.

9. The method according to claim 1, wherein that the displayed picture of the target region gradually adjusts to the target size comprises: the displayed picture of the target region gradually enlarges to the target size or the displayed picture of the target region gradually reduces to the target size.

10. The method according to claim 1, wherein the target size comprises a size of a viewfinder interface.

11. A shooting apparatus, wherein the apparatus comprises:

    a first display module configured to display an initial framed picture;
    a receiving module configured to receive a first input; and
    a second display module configured to display a target framed picture in response to the first input, wherein the target framed picture comprises a displayed picture of a target region, the target region being determined from the initial framed picture based on the first input, and within a preset time, the displayed picture of the target region gradually adjusts to a target size.

12. The apparatus according to claim 11, wherein the apparatus further comprises:

   a focal length module configured to determine a corresponding transition focal length for each framed picture generation moment within the preset time based on a current focal length and a target focal length; and
   a target framed picture module configured to obtain the target framed picture comprising the displayed picture of the target region, respectively at each framed picture generation moment, using a camera module based on the corresponding transition focal length for each framed picture generation moment, to obtain multiple frames of the target framed picture for gradually adjusting the target region to the target size.

13. The apparatus according to claim 12, wherein the target framed picture module comprises:

   an initial target picture sub-module configured to crop an initial target picture comprising the displayed picture of the target region from an image acquired by a sensor, respectively at each framed picture generation moment, based on the corresponding transition focal length for each framed picture generation moment; and
   a resolution sub-module configured to adjust resolution of the initial target picture to obtain the target framed picture with a resolution matching a current shooting resolution.

14. The apparatus according to claim 11, wherein the first input comprises a selection operation of a target object in the initial framed picture, and the apparatus further comprises:
   a region determination module configured to determine a target region comprising the target object in response to the selection operation of the target object in the initial framed picture.

15. The apparatus according to claim 14, wherein the region determination module comprises:

   a selection box sub-module configured to display a selection box corresponding to the target object in response to the selection operation of the target object in the initial framed picture;
   an adjustment sub-module configured to determine a size of the selection box and a position relationship between the selection box and the target object in response to an operation of adjusting the selection box; and
   a target region determination sub-module configured to determine the target region for real-time tracking of the target object from the image acquired by the sensor based on the size of the selection box and the position relationship.

16. The apparatus according to claim 11, wherein the apparatus further comprises:
   a preset time module configured to determine the preset time based on a current focal length of the initial framed picture and a target focal length required to adjust the target region to the target size.

17. The apparatus according to claim 16, wherein the apparatus further comprises:

   a control display module configured to display a preset time adjustment control in a viewfinder interface; and
   a time adjustment module configured to adjust the preset time in response to user input to the preset time adjustment control.

18. The apparatus according to claim 11, wherein the apparatus further comprises:
   a recording module configured to obtain a recorded video comprising the target framed picture after video recording ends.

19. An electronic device, wherein the electronic device comprises a processor and a memory, the memory stores a program or instruction capable of running on the processor, and when the program or instruction is executed by the processor, the steps of the shooting method according to any one of claims 1 to 10 are implemented.

20. A readable storage medium, wherein the readable storage medium stores a program or instruction, and when the program or instruction is executed by a processor, the steps of the shooting method according to any one of claims 1 to 10 are implemented.

21. A chip, wherein the chip comprises a processor and a communication interface, the communication interface is coupled to the processor, and the processor is configured to run a program or instruction to implement the steps of the shooting method according to any one of claims 1 to 10.

22. A computer program product, wherein the program product is stored in a storage medium, and the program product is executed by at least one processor to implement the steps of the shooting method according to any one of claims 1 to 10.

23. A shooting device, wherein the device is configured to perform the steps of the shooting method according to any one of claims 1 to 10.

| Display an initial framed picture | 101 |

↓

| Receive a first input | 102 |

↓

| Display a target framed picture in response to the first input, where the target framed picture includes a display picture of a target region, the target region being determined from the initial framed picture based on the first input, and within a preset time, the display picture of the target region gradually adjusts to a target size | 103 |

FIG. 1

FIG. 2

EP 4 535 771 A1

FIG. 3

19

```
┌────────────────────────────────────────────────────────────────┐
│            Display an initial framed picture                   │  ⌇ 201
└────────────────────────────────────────────────────────────────┘
                              │
                              ▼
┌────────────────────────────────────────────────────────────────┐
│ Determine a target region including a target object in response to a │  ⌇ 202
│ selection operation of the target object in the initial framed picture │
└────────────────────────────────────────────────────────────────┘
                              │
                              ▼
┌────────────────────────────────────────────────────────────────┐
│ Determine a preset time based on a current focal length of the initial │
│ framed picture and a target focal length required to adjust the target │  ⌇ 203
│              region to a target size                           │
└────────────────────────────────────────────────────────────────┘
                              │
                              ▼
┌────────────────────────────────────────────────────────────────┐
│ Determine a corresponding transition focal length for each framed │
│ picture generation instant within the preset time based on a current │  ⌇ 204
│           focal length and a target focal length              │
└────────────────────────────────────────────────────────────────┘
                              │
                              ▼
┌────────────────────────────────────────────────────────────────┐
│ Obtain the target framed picture including the display picture of the │
│ target region, respectively at each framed picture generation instant, │
│ using a camera module based on the corresponding transition focal │  ⌇ 205
│ length for each framed picture generation instant, to obtain multiple │
│ frames of the target framed picture for gradually adjusting the target │
│              region to the target size                        │
└────────────────────────────────────────────────────────────────┘
                              │
                              ▼
┌────────────────────────────────────────────────────────────────┐
│ Obtain a recorded video including the target framed picture after │  ⌇ 206
│              video recording ends                             │
└────────────────────────────────────────────────────────────────┘
```

FIG. 4

FIG. 5

FIG. 6

FIG. 7

81    85

82
83
84

86
87
88

FIG. 8

Shooting apparatus

First display module    401

Receiving module    402

Second display module    403

FIG. 9

M00

Electronic device

M01

Processor

M02

Memory

FIG. 10

FIG. 11

## INTERNATIONAL SEARCH REPORT

| International application No. |
|---|
| **PCT/CN2023/096092** |

### A. CLASSIFICATION OF SUBJECT MATTER

H04N 5/262(2006.01)i

According to International Patent Classification (IPC) or to both national classification and IPC

### B. FIELDS SEARCHED

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNABS, CNTXT, CNKI, VEN, USTXT, EPTXT, WOTXT: 拍摄, 摄像, 摄影, 图像, 画面, 取景, 预览, 显示, 区域, 变焦, 焦距, 调整, 目标, 尺寸, 过渡, 逐渐, 平稳, 步长, 时间, capture, shoot, camera, photo, image, picture, preview, frame, display, area, zoom, adjust, target, size, gradual, stable, step, time

### C. DOCUMENTS CONSIDERED TO BE RELEVANT

| Category* | Citation of document, with indication, where appropriate, of the relevant passages | Relevant to claim No. |
|---|---|---|
| PX | CN 114785969 A (VIVO COMMUNICATION TECHNOLOGY CO., LTD.) 22 July 2022 (2022-07-22) claims 1-13, and description, paragraphs 0119-0171 | 1-23 |
| X | JP 2009071592 A (FUJIFILM CORP.) 02 April 2009 (2009-04-02) description, paragraphs 0027-0093, and figures 1-9 | 1, 8-11, 18-23 |
| Y | JP 2009071592 A (FUJIFILM CORP.) 02 April 2009 (2009-04-02) description, paragraphs 0027-0093, and figures 1-9 | 4, 5, 14, 15 |
| Y | CN 111010506 A (HUAWEI TECHNOLOGIES CO., LTD.) 14 April 2020 (2020-04-14) description, paragraphs 0149-0240, and figures 1-8 | 4, 5, 14, 15 |
| A | CN 105594194 A (OLYMPUS CORP.) 18 May 2016 (2016-05-18) entire document | 1-23 |
| A | CN 114390213 A (HUAWEI TECHNOLOGIES CO., LTD.) 22 April 2022 (2022-04-22) entire document | 1-23 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **23 September 2023** | **24 September 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/096092** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 113037995 A (HUAWEI TECHNOLOGIES CO., LTD.) 25 June 2021 (2021-06-25)<br>entire document | 1-23 |

Form PCT/ISA/210 (second sheet) (July 2022)

**INTERNATIONAL SEARCH REPORT**
**Information on patent family members**

International application No.

**PCT/CN2023/096092**

| Patent document cited in search report | | | Publication date (day/month/year) | Patent family member(s) | | | Publication date (day/month/year) |
|---|---|---|---|---|---|---|---|
| CN | 114785969 | A | 22 July 2022 | None | | | |
| JP | 2009071592 | A | 02 April 2009 | None | | | |
| CN | 111010506 | A | 14 April 2020 | JP | 2023501663 | A | 18 January 2023 |
| | | | | US | 2022394190 | A1 | 08 December 2022 |
| | | | | WO | 2021093793 | A1 | 20 May 2021 |
| | | | | EP | 4044580 | A1 | 17 August 2022 |
| | | | | EP | 4044580 | A4 | 16 November 2022 |
| | | | | KR | 20220080195 | A | 14 June 2022 |
| CN | 105594194 | A | 18 May 2016 | WO | 2015049899 | A1 | 09 April 2015 |
| | | | | US | 2016191819 | A1 | 30 June 2016 |
| | | | | US | 9699389 | B2 | 04 July 2017 |
| | | | | JPWO | 2015049899 | A1 | 09 March 2017 |
| CN | 114390213 | A | 22 April 2022 | None | | | |
| CN | 113037995 | A | 25 June 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210603818